# EUROPEAN PATENT SPECIFICATION

(11) **EP 2 677 078 B1**
(45) Date of publication and mention of the grant of the patent: **12.08.2015**
(21) Application number: 12172827.3
(22) Date of filing: 20.06.2012
(51) Int. Cl.: D06F 93/00, B25J 15/00

(54) **Machine for automated selective collection**
Maschine zur automatisierten selektiven Sammlung
Machine pour la collecte sélective automatisée

(43) Date of publication of application: 25.12.2013
(73) Proprietor: Claudio Ricci S.r.l., 00155 Roma (IT)
(72) Inventor: Ricci, Fabio, 00155 Roma (IT)
(74) Representative: Bergadano, Mirko

(56) References cited:
- EP-A1- 2 159 318
- US-A- 5 846 030
- US-A1- 2009 266 749
- US-A1- 2011 052 365

## Description

The present invention relates to a machine for automated selective collection.

In particular, the machine forming the subject of the present invention finds preferred and advantageous application in sorting clothing in industrial laundries, to which the description makes explicit reference, but without any loss of generality. In detail, the description refers to the sorting operation in industrial laundries set up to process potentially infected clothing.

In environments at risk of contamination, such as the hospital environment for example, personnel are usually required to wear specific clothes, which are subsequently transported to the laundry for washing and/or disinfection.

The collection of this type of clothing very often implicates making distinctions between the clothes that result in different washing procedures.

In fact, it is sufficient to think that all the clothes used by hospital personnel are usually collected together, independently of the different duties that personnel have.

The above-mentioned distinction makes the presence of a sorting step prior to the washing step and disinfection step compulsory. Currently, the sorting step is performed manually by assigned personnel, who sort the clothes on the basis of distinguishing features, such as the colour of the clothes for example, into different groups so that each one is subjected to a relevant washing and/or disinfection process.

It can be immediately seen that such an accepted practice exposes the sorting personnel to an appreciable contamination risk. In connection with this, it should be pointed out that nowadays, ever-growing importance is being given to biological risk management in industrial laundries, in particular for those of health facilities.

In addition, the sorting personnel can only distinguish between clothes based on an evident and visible form of identification, such as the colour of the clothes for example, while they are unable to recognise other distinguishing characteristics, such as the level of chemical or bacterial contamination to which the garment has been subjected for example.

Up to now, the applicant is aware that automated clothes sorting systems are not able to guarantee an effective and efficient job. In particular, the gripper device of the systems in the known art is not able to guarantee picking just the identified single item of clothing with certainty. In other words, when picking the identified item of clothing, the gripper devices can also grasp other items of a different identification class, resulting in them being erroneously grouped.

It follows that in the lack of such certainty in the picking, the entire automated system is compromised as precise placing of the clothes is not guaranteed.

The US Patent 5846030 describes a system for transporting a fabric piece through a series of fluidly communicating tubes. Basically this system comprises an intake line, a first main line, a first routing valve fluidly connected with said first main line, a first air supply valve fluidly connected with said first main line downstream of said first routing valve, a first branch line, a first vacuum source connected with a downstream end of said first branch line, a second main line having first and second ends and being fluidly connected at said first end with said intake line manifold section, a second routing valve fluidly, a second air supply valve fluidly, a second branch line having upstream and downstream ends fluidly, a second vacuum source and means for operably coupling said first and second routing valves.

Thus, the need was felt to have an automated sorting system for clothes based on their characteristics and without incurring the above-stated problems of the known art.

The subject of the present invention is a machine for automated selective collection, the basic characteristics of which are specified in claim 1, while the preferred and/or auxiliary characteristics are specified in claims 2 to 7.

For a better understanding of the invention, an embodiment is described below, purely by way of non-limitative example, and with the aid of the figures in the attached drawings, where:
Figure 1 is a perspective view from above of the machine forming the subject of the present invention in a sorting station of an industrial laundry;
Figure 2 is a side view of the gripper assembly of the machine in Figure 1 in an open position;
Figure 3 is a view from below of the gripper assembly in Figure 2;
Figure 4 is a side view of the gripper assembly of the machine in Figure 1 in a closed position; and
Figure 5 is a view from below of the gripper assembly in Figure 4.

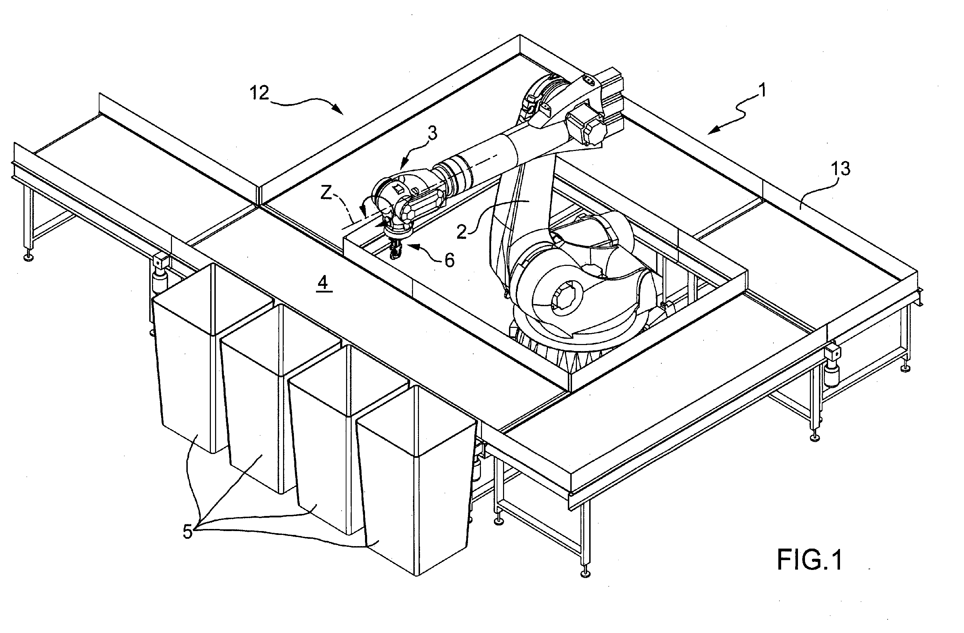

In Figure 1, reference numeral 1 indicates, as a whole, the machine for automated selective collection according to the present invention.

The machine 1 substantially comprises a mobile handling arm 2 and a pick-and-place head 3 housed at a free end 2a of the mobile handling arm 2.

The mobile handling arm 2 is of the type known in robotic applications and is made with a plurality of portions and articulated joints that permit movement of the pick-and-place head 3 without any limitations whatsoever.

As is illustrated in Figure 1, the machine 1 is able to pick up a single fabric item from a multitude of other items arranged on a picking surface 4 and to place it inside one of the containers 5 on the basis of a previously established characteristic that is identifiable by special identification means housed in the pick-and-place head 3.

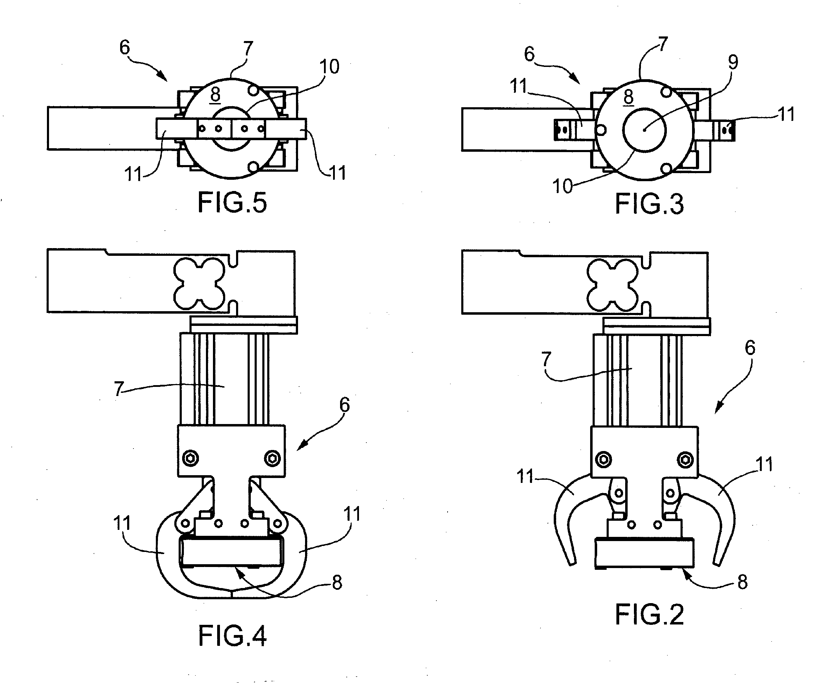

The pick-and-place head 3 comprises a gripper assembly 6, shown in Figures 2-5.

The gripper assembly 6 comprises a pneumatic device 7 having a capture surface 8, arranged at the bottom and facing the picking surface 4.
The pneumatic device 7 internally houses a vacuum circuit and an overpressure circuit, not shown for simplicity.

As shown in Figure 3 the capture surface 8 contains a central hole 9 connected to the vacuum circuit and a circular shaped annular opening 10 arranged to surround the hole 9 and connected to the overpressure circuit.

The shape of the annular opening 10 is not essential, although a circular shape brings further advantages due to creation of a uniform and symmetric jet of air with respect to the hole 9.

The gripper assembly 6 comprises a pair on pincers 11, which are movable between an open position (Figures 2 and 3), in which the capture surface 8 is free of impediments to move into contact with the item to be taken, and a closed position (Figures 4 and 5), in which the pincers 11 are closed beneath the capture surface 8 to grasp the fabric item previously captured by the suction action on the capture surface 8.

As may be obvious, the particular shape of the pincers 11, as well as their number, is not to be considered relevant for the purposes of protection.

The machine 1 comprises a command and control unit delegated to control the movements of the movable parts of the machine 1, as well as the alternating operation of the pneumatic device 7.

The machine 1 comprises handling means able to produce an oscillating rotatory movement of the pick-and-place head 3 around an axis Z substantially perpendicular to said capture surface. This oscillating rotatory movement serves to further guarantee the picking of just one item. In fact, if the item picked up by the gripper assembly inadvertently drags another item with it, for example, due to electrostatic attraction, the oscillating rotatory movement will cause the inadvertently dragged item to fall.

As mentioned above, the machine 1 comprises known identification means that are not shown, are preferably housed in the pick-and-place head and are connected to the command and control unit. There can be various types of identification means, for example, of the type that identifies the colour if the fabric items are differentiated by colour, or of the type that identifies the level of chemical and/or biological contamination.

The machine 1 also comprises X-ray sensors capable of checking if there are any metal foreign bodies left inside the fabric items, the presence of which, for example, could damage the machinery used for washing.

In use, once the collection of fabric items are made to pass on the picking surface 4, the identification means identify the items to be picked according to the setup implemented on the command and control unit, which, in turn, controls the mobile handling arm to move the pick-and-place head 3 over the item to be picked. Picking takes place by causing the gripper assembly 6 to place the capture surface 8 in contact with the item and simultaneously operating the vacuum and overpressure circuits. The selective picking of selected item is guaranteed thanks to the combined action of the vacuum through the hole 9 and the overpressure through the annular opening 10. The machine will then operate the pincers 11 to ensure still further grip on the item and, after having operated the means for the oscillating rotation of the pick-and-place head 3, the mobile handling arm 2 will move the pick-and-place head to one of the containers 5, into which the picked item is dropped, as previously set on the command and control unit.

In alternative to that described above, the machine forming the subject of the present invention can provide for the identification means to be used on the fabric item that has already been picked by the pick-and-place head 3. In other words, once the pick-and-place head 3 has picked a single fabric item, the identification means analyse it to indicate, according to a predetermined setting, where it should be deposited and, therefore, to which of the containers 5 the mobile handling arm 2 must take it.

A further subject of the present invention is a sorting station 12 comprising the machine forming the subject of the present invention. As shown in Figure 1, the sorting station 12 comprises the picking surface 4, implemented via a conveyor belt and inserted within a closed loop 13 of conveyor belts, which are arranged in inclined positions with respect to each other for the purpose of causing an upstream action of separating the fabric items in order to further facilitate the selective picking.

In use, once the collection of fabric items is made to pass on the picking surface 4, the identification means identify the items to be picked according to the setup implemented on the command and control unit, which, in turn, controls the mobile handling arm to move the pick-and-place head 3 over the specific item to be picked. Picking takes place by causing the gripper assembly 6 to place the capture surface 8 in contact with the item and simultaneously operating the vacuum and overpressure circuits. The selective picking of selected item is guaranteed thanks to the combined action of the vacuum through the hole 9 and the overpressure through the annular opening 10. The machine will then operate the pincers 11 to ensure still further grip on the item and, after having operated the means for the oscillating rotation of the pick-and-place head 3, the mobile handling arm 2 will move the pick-and-place head to one of the containers 5, into which the picked item is dropped, as previously set on the command and control unit.

As may appear immediately obvious from the foregoing description, the machine forming the subject of the present invention offers the important advantage of guaranteeing the automated picking of a single item and, therefore, of being able to effectively substitute the work of human personnel, with obvious safety advantages with regard to infection.

Furthermore, it should be underlined how an efficient automated machine can ensure productivity that is certainly greater than that of human personnel, as it can be kept running without the need for rest breaks.

## Claims

1. A machine (1) for the automated selective collection of single items comprising a mobile handling arm (2), a pick-and-place head (3) fixed to a free end of said mobile handling arm (2), identification means for the item to be picked or already picked, a control unit suitable for the control and handling of said machine's operating means and moving parts and a gripper assembly (b) housed in said pick-and-place head (3) and **characterized in that** said gripper assembly (6) comprises:
- a pneumatic device (7) having a capture surface (8) with a central opening (9) through which a vacuum is created, and an annular opening (10) that is designed to surround said central opening (9) and through which overpressure is created; and
- a pincer device (11) arranged such that it closes beneath said capture surface (8)

2. The machine for automated selective collection according to claim 1, **characterized in that** said central opening is a hole (9).

3. The machine for automated selective collection according to one of the preceding claims, **characterized in that** it comprises handling means able to cause a rotatory movement of said pick-and-place head (3) around one of its axes (Z) substantially perpendicular to said capture surface.

4. The machine for automated selective collection according to one of the preceding claims, **characterized in that** said identification means are able to identify the colour of the item to be picked or already picked and/or its level of chemical and/or biological contamination.

5. The machine for automated selective collection according to one of the preceding claims, **characterized in that** it comprises X-ray sensors able to check for the presence of foreign bodies in the items to be picked or already picked.

6. A sorting station **characterized in that** it comprises a machine for automated selective collection according to any of the preceding claims.

7. The sorting station according to claim 6, **characterized by** comprising a picking surface (4), implemented via a conveyor belt and inserted within a closed loop (13) of conveyor belts, which are arranged in inclined positions with respect to each other for the purpose of causing an upstream action of separating the fabric items in order to further facilitate the selective picking.

## Patentansprüche

1. Maschine (1) zur automatisierten selektiven Auswahl von einzelnen Gegenständen, aufweisend einen mobilen Hantierarm (2), einen Pick-and-Place-Kopf (3), welcher an einem freien Ende des mobilen Hantierarms (2) befestigt ist, Identifikationsmittel für den herauszugreifenden oder bereits herausgegriffenen Gegenstand, eine Steuereinheit, ausgebildet zum Steuern und Bedienen der Betriebsmittel der Maschine und zum Bewegen von Teilen, und ein Greifersystem (6), welches in dem Pick-and-Place-Kopf (3) eingehaust ist, **dadurch gekennzeichnet, dass** das Greifersystem (6) aufweist:
- eine pneumatische Vorrichtung (7) mit einer Erfassungsoberfläche (8) mit einer zentralen Öffnung (9), durch welche ein Vakuum erzeugt wird, und einer ringförmigen Öffnung (10), welche ausgebildet ist, die zentrale Öffnung (9) zu umgeben und durch welche Überdruck erzeugt wird; und
- eine Zangenvorrichtung (11), derart angeordnet, dass sie nahe bei der Erfassungsoberfläche (8) schließt.

2. Maschine zur automatisierten selektiven Auswahl gemäß Anspruch 1, **dadurch gekennzeichnet, dass** die zentrale Öffnung ein Loch (9) ist.

3. Maschine zur automatisierten selektiven Auswahl gemäß einem der vorangehenden Ansprüche, **dadurch gekennzeichnet, dass** sie Hantierelemente umfasst, welche ausgebildet sind, eine Drehbewegung des Pick-and-Place-Kopfes (3) um eine seiner Achsen (z) im Wesentlichen senkrecht zu der Erfassungsfläche zu erzeugen.

4. Maschine zur automatisierten selektiven Auswahl gemäß einem der vorangehenden Ansprüche, **dadurch gekennzeichnet, dass** die Identifikationsmittel ausgebildet sind, die Farbe des herauszugreifenden oder bereits herausgegriffenen Gegenstands und/oder dessen Grad an chemischer und/oder biologischer Kontaminierung zu identifizieren.

5. Maschine zur automatisierten selektiven Auswahl gemäß einem der vorangehenden Ansprüche, **dadurch gekennzeichnet, dass** sie Röntgensensoren umfasst, welche ausgebildet sind, das Vorhandensein von Fremdkörpern in den herauszugreifenden oder bereits herausgegriffenen Gegenständen zu überprüfen.

6. Sortierstation, **dadurch gekennzeichnet, dass** sie eine Maschine zur automatisierten selektiven Auswahl gemäß einem der vorangehenden Ansprüche umfasst.

7. Sortierstation gemäß Anspruch 6, **dadurch gekennzeichnet, dass** sie eine Aufgreifoberfläche (4) umfasst, welche durch ein Förderband implementiert ist und in eine geschlossene Schleife (13) von Förderbändern eingefügt ist, welche in erhöhten Positionen mit Bezug aufeinander angeordnet sind, zum Erzeugen einer Stromaufwärts-Wirkung zum Trennen der erzeugten Gegenstände, um das selektive Herausgreifen weiter zu vereinfachen.

## Revendications

1. Machine (1) pour la collecte sélective automatisée d'éléments individuels comprenant un bras de manipulation mobile (2), une tête d'insertion (3) fixée sur une extrémité libre dudit bras de manipulation mobile (2), des moyens d'identification pour l'élément à insérer ou déjà inséré, une unité de commande adaptée pour la commande et la manipulation desdits moyens opérationnels de la machine et des parties mobiles et un ensemble de préhension (6) logé dans ladite tête d'insertion (3) et **caractérisée en ce que** ledit ensemble de préhension (6) comprend :
- un dispositif pneumatique (7) présentant une surface de capture (8) avec une ouverture centrale (9), par laquelle un vide est créé et une ouverture annulaire (10) qui est conçue pour entourer ladite ouverture centrale (9) et par laquelle une surpression est créée ; et
- un dispositif à pince (11) agencé de sorte qu'il se ferme sous ladite surface de capture (8).

2. Machine pour la collecte sélective automatisée selon la revendication 1, **caractérisée en ce que** ladite ouverture centrale est un trou (9).

3. Machine pour la collecte sélective automatisée selon l'une quelconque des revendications précédentes, **caractérisée en ce qu'**elle comprend des moyens de manipulation capables d'entraîner un mouvement rotatif de ladite tête d'insertion (3) autour de l'un de ses axes (Z) sensiblement perpendiculaires à ladite surface de capture.

4. Machine pour la collecte sélective automatisée selon l'une quelconque des revendications précédentes, **caractérisée en ce que** lesdits moyens d'identification sont capables d'identifier la couleur de l'élément à insérer ou déjà inséré et/ou son niveau de contamination chimique et/ou biologique.

5. Machine pour la collecte sélective automatisée selon l'une quelconque des revendications précédentes, **caractérisée en ce qu'**elle comprend des capteurs à rayons X capables de vérifier la présence de corps étrangers dans les éléments à insérer ou déjà insérés.

6. Poste de triage, **caractérisé en ce qu'**il comprend une machine pour la collecte sélective automatisée selon l'une quelconque des revendications précédentes.

7. Poste de triage selon la revendication 6, **caractérisé en ce qu'**il comprend une surface de préhension (4) mise en oeuvre via une bande transporteuse et insérée dans une boucle fermée (13) de bandes transporteuses qui sont agencées dans des positions inclinées les unes par rapport aux autres afin d'amener une action en amont de séparation des éléments textiles dans le but de faciliter davantage la préhension sélective.
